# EUROPÄISCHE PATENTSCHRIFT

(11) **EP 4 497 671 B1**
(45) Veröffentlichungstag und Bekanntmachung des Hinweises auf die Patenterteilung: **10.06.2026**
(21) Anmeldenummer: 24189079.7
(22) Anmeldetag: 17.07.2024
(51) Int. Cl.: B62M 6/45, B62M 25/08

(54) **VERFAHREN ZUM STEUERN EINER GANGSCHALTUNG EINES FAHRRADS**
METHOD FOR CONTROLLING A GEAR SHIFT OF A BICYCLE
PROCÉDÉ DE COMMANDE D'UN CHANGEMENT DE VITESSE D'UNE BICYCLETTE

(30) Priorität: 24.07.2023 DE 102023207004
(43) Veröffentlichungstag der Anmeldung: 29.01.2025
(73) Patentinhaber: Robert Bosch GmbH, 70442 Stuttgart (DE)
(72) Erfinder: Stegmaier, Juergen, 72827 Wannweil (DE)

(56) Entgegenhaltungen:
- WO-A1-2022/112504
- FR-A1- 3 116 796

## Beschreibung

### Stand der Technik

Die vorliegende Erfindung betrifft ein Verfahren zum Steuern einer Gangschaltung eines Fahrrads, ein Schaltsystem eines Fahrrads, und ein Fahrrad.

Bekannt sind Schaltsysteme für Fahrräder, welche elektronisch betätigbar ausgebildet sind. Dadurch ergibt sich die Möglichkeit, eine automatische Betätigung eines Gangwechsels bereitzustellen. Zum Auslösen eines derartigen automatisch betätigten Gangwechsels sind beispielsweise bestimmte Schaltschwellen vorgesehen. Derartige Schaltschwellen können in Form von Tabellen in einem Speicher einer Steuervorrichtung des Schaltsystems hinterlegt sein. Bei automatischen Schaltungen für Fahrräder ergibt sich häufig ein Zielkonflikt zwischen der Bereitstellung einer optimalen Übersetzung für einen möglichst hohen Tretkomfort für den Fahrer des Fahrrads und einer Vermeidung von unnötig häufigen Gangwechseln. Dokument WO 2022/112504A1 zeigt ein Verfahren zum Steuern einer Gangschaltung eines Fahrrads.

### Offenbarung der Erfindung

Das erfindungsgemäße Verfahren mit den Merkmalen des Anspruchs 1 bietet demgegenüber den Vorteil, dass auf einfache Weise eine automatische Betätigung von Gangwechsel eine Gangschaltung eines Fahrrads ermöglicht werden kann, wobei zuverlässig ein besonders hoher Tretkomfort für einen Fahrer des Fahrrads bereitgestellt werden kann. Dies wird erfindungsgemäß erreicht durch ein Verfahren zum Steuern einer Gangschaltung eines Fahrrads, umfassend die Schritte:
- Ermitteln eines Referenz-Schaltpunkts,
- Ermitteln einer momentanen Fahrsituation des Fahrrads,
- Bestimmen einer Schalthysterese basierend auf der ermittelten momentanen Fahrsituation, und
- Ermitteln eines Soll-Schaltpunkts durch Anpassen des Referenz-Schaltpunkts mittels der bestimmten Schalthysterese, wobei die Schalthysterese ein bestimmter Änderungsbetrag ist, um den der Referenz-Schaltpunkt hin zu dem Soll-Schaltpunkt verschoben wird.

Das heißt, bei dem Verfahren wird eine charakteristische Referenz-Schaltschwelle in Form des Referenz-Schaltpunkts ermittelt, und diese adaptiv mittels einer, insbesondere veränderbaren, Schalthysterese angepasst, um eine tatsächliche Schaltschwelle in Form des Soll-Schaltpunkts zu ermitteln.

Als Fahrsituation können dabei eine Vielzahl an möglichen Fahrsituationen ermittelt und für die Änderung der Schalthysterese verwendet werden. Beispielsweise kann als Fahrsituation eine Erkennung einer Steigung oder auch eine Erkennung einer vorbestimmten Betätigungsweise durch einen Fahrer des Fahrrads ermittelt werden und eine darauf abgestimmte Anpassung der Schalthysterese erfolgen.

Als Schalthysterese wird ein bestimmter Änderungsbetrag angesehen, um den der Referenz-Schaltpunkt hin zu dem Soll-Schaltpunkt verschoben wird. Beispielsweise kann die Schalthysterese als Trittfrequenz-Betrag angesehen werden. Alternativ bevorzugt kann die Schalthysterese in einer weiteren physikalischen Größe definiert sein, insbesondere in Abhängigkeit von welcher der Referenz-Schaltpunkt definiert ist.

Vorzugsweise kann die Schalthysterese als ein bestimmter konstanter Wert bestimmt werden, um welche beispielsweise der Referenz-Schaltpunkt hin zum Soll-Schaltpunkt verschoben wird. Alternativ bevorzugt kann die Schalthysterese als eine bestimmte prozentuale Abweichung bezüglich des Referenz-Schaltpunkts bestimmt werden.

Vorzugsweise wird bei einer Gangschaltung mit mehreren unterschiedlichen Gangstufen, das heißt mehreren verschiedenen Übersetzungsverhältnissen, pro Gangstufe jeweils ein separater Referenz-Schaltpunkt ermittelt. Bevorzugt ist die Referenz-Trittfrequenz für sämtliche Gangstufen identisch. Alternativ bevorzugt kann für unterschiedliche Gangstufen auch eine unterschiedliche Referenz-Trittfrequenz definiert sein.

Das Verfahren bietet somit den Vorteil, dass eine optimale Schaltstrategie bereitgestellt werden kann, indem eine adaptive Schalthysterese in Abhängigkeit des momentanen Fahrbetriebs des Fahrrads angepasst wird. Als Referenz-Trittfrequenz kann beispielsweise eine individuelle Wunsch-Trittfrequenz des Fahrers des Fahrrads verwendet werden. Dadurch kann durch das Verfahren beispielsweise eine optimale Einregelung der Schaltstrategie beispielsweise auf eine bestimmte Trittfrequenz erfolgen, wobei durch die adaptive Anpassung der Schalthysterese eine Anzahl an Gangwechseln reduziert werden kann. Insbesondere kann durch die adaptive Anpassung der Schalthysterese ein Optimum aus möglichst präziser Einregelung auf einen vorbestimmten Kennwert und/oder eine möglichst geringe Anzahl an Schaltwechseln erreicht werden. Insbesondere kann durch das Verfahren somit ein besonders effizienter und komfortabler Betrieb des Fahrrads ermöglicht werden.

Die Unteransprüche haben bevorzugte Weiterbildungen der Erfindung zum Inhalt.

Bevorzugt wird der Referenz-Schaltpunkt derart ermittelt, dass bei einem Gangwechsel am Referenz-Schaltpunkt ein durch den Gangwechsel bewirkter Trittfrequenz-Sprung symmetrisch zu einer Referenz-Trittfrequenz ist. Das heißt, es wird eine charakteristische Schaltschwelle in Form des Referenz-Schaltpunkts ermittelt. Wenn genau an diesem Referenz-Schaltpunkt einen Schaltvorgang, das heißt ein Gangwechsel, insbesondere in eine unmittelbar benachbarte Gangstufe, durchgeführt wird, bewirkt dieser Gangwechsel einen bestimmten Trittfrequenz-Sprung. Vorzugsweise basierend auf den vorbekannten mechanischen Eigenschaften der Gangschaltung, und vorzugsweise zusätzlich des Antriebs des Fahrrads, wird der Referenz-Schaltpunkt dabei derart automatisch ermittelt, dass der entsprechende Trittfrequenz-Sprung an diesem Referenz-Schaltpunkt symmetrisch zu einer Referenz-Trittfrequenz-ist. Als Trittfrequenz-Sprung wird insbesondere ein Betrag einer Differenz der jeweiligen Trittfrequenz vor und nach dem Gangwechsel angesehen. Insbesondere wird als Trittfrequenz-Sprung eine theoretische Änderung der Trittfrequenz angesehen, welche sich im Falle einer Pedalbetätigung vor, während und nach dem Gangwechsel, insbesondere unter Zug am Antriebssystem des Fahrrads, ergibt. Ein derartiger Trittfrequenz-Sprung ist beispielsweise anhand der mechanischen Zusammenhänge des Schaltsystems und des gesamten Antriebsstrangs des Fahrrads genau definiert. Mit anderen Worten ist der Referenz-Schaltpunkt derart definiert, dass, beispielsweise beim Hochschalten in ein größeres Übersetzungsverhältnis, eine Trittfrequenz unmittelbar vor dem Gangwechsel um einen vorbestimmten Betrag größer als die Referenz-Trittfrequenz. Gleichzeitig ist die Trittfrequenz unmittelbar nach dem Gangwechsel um denselben vorbestimmten Betrag kleiner als die Referenz-Trittfrequenz ist. Beispielsweise bei einem Herunterschalten in ein kleineres Übersetzungsverhältnis ist die Trittfrequenzänderung entsprechend genau umgekehrt.

Bevorzugt ist die Referenz-Trittfrequenz ein vordefinierter konstanter Wert. Alternativ bevorzugt ist die Referenz-Trittfrequenz ein durch einen Nutzer vorgebbarer konstanter Wert. Weiter alternativ bevorzugt ist die Referenz-Trittfrequenz variabel ausgebildet, und insbesondere in Abhängigkeit von einem oder mehreren der folgenden Parameter festlegbar: momentane Gangstufe, Fahrparameter des Fahrrads, Umgebungsparameter. Insbesondere können diese Parameter sensorbasiert erfasst werden und/oder mittels einer Eingabevorrichtung eingegeben werden. Als Fahrparameter können beispielsweise eine Geschwindigkeit und/oder eine Neigung und/oder eine Beschleunigung des Fahrrads verwendet werden. Beispielsweise können als Umgebungsparameter eine momentane Steigung, an der sich das Fahrrad befindet, und/oder Streckenparameter, wie beispielsweise zu fahrende Kurven, einer zu fahrenden Strecke verwendet werden. Dadurch kann eine besonders flexible und präzise Anpassung der Schaltstrategie an den Fahrbetrieb des Fahrrads und/oder an nutzerindividuelle Präferenzen vorgenommen werden.

Besonders bevorzugt wird in einer ersten Fahrsituation ein Reduzieren der Schalthysterese vorgenommen, um eine Abweichung einer Ist-Trittfrequenz von der Referenz-Trittfrequenz zu reduzieren, insbesondere zu minimieren. Als Ist-Trittfrequenz wird insbesondere eine tatsächliche momentane Trittfrequenz angesehen, mit der der Fahrer des Fahrrads die Pedale betätigt. Mit anderen Worten wird in der ersten Fahrsituation mittels einer kleinen Hysterese ein möglichst präzises Einregeln auf die Referenz-Trittfrequenz bewirkt. Alternativ oder zusätzlich bevorzugt wird in einer zweiten Fahrsituation ein Erhöhen der Schalthysterese vorgenommen, um eine Anzahl an Gangwechseln, insbesondere während der Dauer der zweiten Fahrsituation, zu reduzieren, insbesondere zu minimieren. Mit anderen Worten wird in der zweiten Fahrsituation mittels einer großen Hysterese bewirkt, dass weniger Schaltvorgänge vorgenommen werden.

Bevorzugt wird pro Referenz-Schaltpunkt jeweils ein Soll-Hochschaltpunkt und jeweils ein Soll-Runterschaltpunkt mittels der Schalthysterese ermittelt. Insbesondere wird hierfür der Referenz-Schaltpunkt mittels der Schalthysterese in jeweils entgegengesetzte Richtungen verschoben. Vorzugsweise wird als Soll-Hochschaltpunkt ein Schaltpunkt angesehen, in dem in eine größere Gangstufe, das heißt in ein größeres Übersetzungsverhältnis, geschalten wird. Weiter vorzugsweise wird als Soll-Runterschaltpunkt ein Schaltpunkt angesehen, in dem in eine kleinere Gangstufe, das heißt in ein kleineres Übersetzungsverhältnis, geschalten wird. Damit kann besonders zuverlässig und effizient ein automatisches Schaltverfahren bereitgestellt werden, welches unerwünschte häufige Gangwechsel vermeiden kann.

Vorzugsweise ist der Soll-Runterschaltpunkt bei kleineren Geschwindigkeiten, insbesondere in Bezug auf einen Fahrbetrieb des Fahrrads, im Vergleich zum Referenz-Schaltpunkt definiert. Alternativ oder zusätzlich bevorzugt ist der Soll-Hochschaltpunkt bei größeren Geschwindigkeiten, insbesondere in Bezug auf einen Fahrbetrieb des Fahrrads, im Vergleich zum Referenz-Schaltpunkt definiert. Beispielsweise bedeutet das, dass bei einer Reduktion der Geschwindigkeit und damit einhergehenden Reduktion der Trittfrequenz beim Erreichen der Referenz-Trittfrequenz noch nicht unmittelbar geschalten wird, sondern erst nach einer weiteren Reduktion bis der Soll-Runterschaltpunkt erreicht wird. Vorzugsweise erfolgt das Hochschalten bei Erhöhung der Geschwindigkeit in analoger Weise. Dadurch kann bei optimaler Effizienz ein hoher Fahrkomfort beim Betrieb des Fahrrads bereitgestellt werden.

Weiter bevorzugt ist die Schalthysterese pro Referenz-Schaltpunkt zum jeweiligen Soll-Runterschaltpunkt und Soll-Hochschaltpunkt gleich. Mit anderen Worten sind durch eine gleiche Schalthysterese der Soll-Runterschaltpunkt und der Soll-Hochschaltpunkt symmetrisch zum Referenz-Schaltpunkt angeordnet. Alternativ bevorzugt ist die Schalthysterese pro Referenz-Schaltpunkt zum jeweiligen Soll-Runterschaltpunkt und Soll-Hochschaltpunkt unterschiedlich. Mit anderen Worten sind mittels verschiedener Schalthysteresen der Soll-Runterschaltpunkt und der Soll-Hochschaltpunkt asymmetrisch zum Referenz-Schaltpunkt angeordnet.

Besonders bevorzugt wird die Schalthysterese in Abhängigkeit von einem oder mehreren der folgenden Parameter variabel angepasst: momentane Gangstufe, Fahrparameter des Fahrrads, Umgebungsparameter, nutzerindividuelle Eingabe. Insbesondere können diese Parameter sensorbasiert erfasst werden und/oder mittels einer Eingabevorrichtung eingegeben werden. Als Fahrparameter können beispielsweise eine Geschwindigkeit und/oder eine Neigung und/oder eine Beschleunigung des Fahrrads verwendet werden. Beispielsweise können als Umgebungsparameter eine momentane Steigung, an der sich das Fahrrad befindet, und/oder Streckenparameter, wie beispielsweise zu fahrende Kurven, einer zu fahrenden Strecke verwendet werden. Dadurch kann eine besonders genaue Anpassung der Schaltstrategie an den Fahrbetrieb des Fahrrads vorgenommen werden.

Besonders bevorzugt umfasst das Verfahren die Schritte: Ermitteln einer Konstantfahrt als momentane Fahrsituation, und Verringerung der Schalthysterese im Ansprechen auf das Ermitteln der Konstantfahrt. Vorzugsweise entspricht die Konstantfahrt der ersten Fahrsituation. Vorzugsweise wird als Konstantfahrt eine Fahrt des Fahrrads mit im wesentlichen konstanter Geschwindigkeit über zumindest einen vorbestimmten Zeitraum angesehen. Beispielsweise wird als Konstantfahrt eine Fahrt des Fahrrads angesehen, wenn über einen Zeitraum von beispielsweise mindestens 10 Sekunden, insbesondere mindestens 30 Sekunden, eine maximale Schwankung der Geschwindigkeit des Fahrrads 15 %, bevorzugt 10 %, insbesondere 5 %, beträgt. Vorzugsweise wird die Schalthysterese im Ansprechen auf das Ermitteln der Konstantfahrt derart bestimmt, dass die Schalthysterese eine prozentuale Abweichung bezüglich des Referenz-Schaltpunkts von maximal 10 %, bevorzugt maximal 7 %, insbesondere maximal 5 %, beträgt. Somit kann bei einer stationären Fahrt mit einer über einen längeren Zeitraum im Wesentlichen konstanter Fahrgeschwindigkeit ein möglichst gutes Einstellen einer Wunsch-Trittfrequenz des Fahrers, welche beispielsweise der Referenz-Trittfrequenz entsprechen kann, ermöglicht werden.

Weiter bevorzugt umfasst das Verfahren die Schritte: Ermitteln einer Tretunterbrechung als momentane Fahrsituation, und Erhöhen der Schalthysterese im Ansprechen auf das Ermitteln der Tretunterbrechung. Vorzugsweise entspricht die Tretunterbrechung der zweiten Fahrsituation. Besonders bevorzugt kann das Erhöhen der Schalthysterese im Ansprechen auf das Ermitteln der Tretunterbrechung ausschließlich für den Soll-Runterschaltpunkt erfolgen, wobei die Schalthysterese für den Soll-Hochschaltpunkt vorzugsweise beibehalten wird. Vorzugsweise wird als Tretunterbrechung ein Stoppen der Pedalbetätigung durch den Fahrer für mindestens einen vorbestimmten Zeitraum, von beispielsweise mindestens 2 Sekunden, bevorzugt maximal 10 Sekunden, angesehen. Alternativ bevorzugt kann als Tretunterbrechung allgemein ein Zustand angesehen werden, indem der Fahrer des Fahrrads kein Tretmoment auf den Antriebsstrang des Fahrrads ausübt, wobei beispielsweise auch ein zugfreies Weiterdrehen der Pedale ohne Kraftübertragung auf den Antriebsstrang möglich ist. Vorzugsweise wird die Schalthysterese im Ansprechen auf das Ermitteln der Tretunterbrechung derart bestimmt, dass die Schalthysterese eine prozentuale Abweichung bezüglich des Referenz-Schaltpunkts von mindestens 10 %, bevorzugt mindestens 13 %, insbesondere mindestens 15 %, beträgt. Eine derartige Tretunterbrechung kann beispielsweise bei einer Kurvenfahrt auftreten. Das, beispielsweise kurzzeitige, erhöhen der Schalthysterese bewirkt dabei, dass bei der Tretunterbrechung nicht unmittelbar in einen kleineren Gang zurückgeschaltet wird. Dadurch kann beispielsweise verhindert werden, dass nach Wiederaufnehmen der Pedalbetätigung durch den Fahrer der vorherige Gangwechsel gleich wieder zurückgenommen werden muss. Das heißt, es kann ein unerwünschtes Hin- und Herschalten vermieden werden.

Weiter bevorzugt umfasst das Verfahren die Schritte: Ermitteln einer Bergfahrt als momentane Fahrsituation, und Erhöhen der Schalthysterese im Ansprechen auf das Ermitteln der Bergfahrt. Vorzugsweise entspricht die Bergfahrt der zweiten Fahrsituation. Vorzugsweise wird als Bergfahrt eine Fahrt des Fahrrads an einer Steigung bergauf angesehen, wobei die Steigung bevorzugt mindestens einer Steigung von 5 % bezüglich einer Horizontalen entspricht. Vorzugsweise wird die Schalthysterese im Ansprechen auf das Ermitteln der Bergfahrt derart bestimmt, dass die Schalthysterese eine prozentuale Abweichung bezüglich des Referenz-Schaltpunkts von mindestens 10 %, bevorzugt mindestens 13 %, insbesondere mindestens 15 %, beträgt. Eine derartige Erhöhung der Schalthysterese bei einer Bergfahrt ist insbesondere bei einem Elektrofahrrad vorteilhaft. Wenn sich beispielsweise die Fahrgeschwindigkeit des Elektrofahrrads aufgrund geringer Motorleistung verringert, wird in einen kleineren Gang geschalten. Insbesondere bei einem Elektrofahrrad mit im Bereich der Kurbelwelle angeordnetem Motor steigt durch den Gangwechsel die Motordrehzahl im kleineren Gang wieder an, wodurch beispielsweise wieder mehr Motorleistung zur Verfügung stehen kann und das Elektrofahrrad beschleunigen kann und dadurch beispielsweise wieder in einen größeren Gang geschaltet werden könnte. Durch Erhöhen der Schalthysterese wird somit auf einfache Weise effektiv ein unerwünschtes häufiges Hin- und Herschalten vermieden.

Bevorzugt umfasst das Verfahren die Schritte: Ermitteln einer Beschleunigungsfahrt als momentane Fahrsituation, und Verringern der Schalthysterese für den Soll-Hochschaltpunkt, insbesondere auf den Wert Null. Bevorzugt wird die Schalthysterese für den Soll-Runterschaltpunkt konstant gehalten, oder alternativ bevorzugt erhöht. Vorzugsweise entspricht die Beschleunigungsfahrt, insbesondere zumindest teilweise, der ersten Fahrsituation. Vorzugsweise wird als Beschleunigungsfahrt eine Fahrt des Fahrrads mit positiver Beschleunigung angesehen, das heißt mit signifikant steigender Geschwindigkeit. Insbesondere wenn während der Beschleunigungsfahrt mehrere Gangwechsel hintereinander erfolgen, kann dadurch eine optimale Trittfrequenz bereitgestellt werden, um eine besonders effiziente Beschleunigung des Fahrrads zu ermöglichen. Beispielsweise kann durch die kleine Schalthysterese, vorzugsweise von Null, für den Soll-Hochschaltpunkt ein unmittelbares gezieltes Hochschalten ermöglicht werden, wodurch beispielsweise vermieden werden kann, dass bei dem Beschleunigungsvorgang schneller pedaliert wird, als es optimal wäre.

Vorzugsweise umfasst das Verfahren ferner den Schritt: Ermitteln einer SchaltGeschwindigkeit am Soll-Schaltpunkt basierend auf einem Übersetzungsverhältnis des Fahrrads. Insbesondere wird als SchaltGeschwindigkeit diejenige Geschwindigkeit angesehen, mit welcher sich das Fahrrad am Soll-Schaltpunkt, beispielsweise theoretisch, fortbewegt. Diese Schalt-Geschwindigkeit ist insbesondere vorgegeben durch den mechanischen Zusammenhang zwischen, insbesondere theoretischer, Trittfrequenz am Soll-Schaltpunkt und dem Übersetzungsverhältnis des Fahrrads, insbesondere in Abhängigkeit der entsprechenden Gangstufe. Dabei wird ein GesamtÜbersetzungsverhältnis, beispielsweise zwischen Kurbeln und einem Hinterrad, des Fahrrads angesehen. Dadurch kann eine besonders einfache Ermittlung der vorteilhaften Schaltpunkte erfolgen.

Bevorzugt kann die Schalt-Geschwindigkeit jederzeit ermittelt werden, beispielsweise auch im Stillstand und/oder vor einer erstmaligen Inbetriebnahme des Fahrrads. Die Schaltgeschwindigkeit kann dabei beispielsweise als Kennwert für das Schaltsystem gespeichert sein.

Weiter bevorzugt umfasst das Verfahren die Schritte: Erfassen einer Geschwindigkeit, insbesondere einer momentanen Geschwindigkeit des Fahrrads, und Ansteuern eines Gangwechsels, wenn die erfasste Geschwindigkeit die Schalt-Geschwindigkeit erreicht. Das heißt, das Initiieren der Schaltvorgänge erfolgt bei dem Verfahren in Abhängigkeit der erfassten Geschwindigkeit, mit der sich das Fahrrad fortbewegt. Dadurch kann neben einer besonders einfach kostengünstigen Durchführung des Verfahrens auch eine besonders vorteilhafte Schaltstrategie bereitgestellt werden, da diese beispielsweise unabhängig von einer momentanen tatsächlichen Trittfrequenz, mit der der Fahrer die Pedale des Fahrrads betätigt, sein kann. Beispielsweise bei einer Bergabfahrt, wenn keine Pedalbetätigung erfolgt, kann in Abhängigkeit der Geschwindigkeit der optimale Schaltpunkt bestimmt werden, sodass beispielsweise bei Wiedereinsetzen der Pedalbetätigung die optimale Gangstufe eingelegt sein kann.

Vorzugsweise umfasst das Verfahren die Schritte: Ermitteln einer Schalt-Trittfrequenz am Soll-Schaltpunkt, Erfassen einer Trittfrequenz, insbesondere einer momentanen Trittfrequenz, und Ansteuern eines Gangwechsels, wenn die erfasste Trittfrequenz die Schalt-Trittfrequenz erreicht. Das heißt, das Initiieren der Schaltvorgänge erfolgt hierbei in Abhängigkeit der erfassten Trittfrequenz, mit der der Fahrer die Pedale des Fahrrads betätigt. Dadurch kann eine besonders präzise Steuerung der Schaltvorgänge zum optimalen Einregeln einer vorteilhaften Trittfrequenz bereitgestellt werden.

Besonders bevorzugt weist die Gangschaltung des Fahrrads mehrere verschiedene Gangstufen auf. Für jeden Gangwechsel zwischen verschiedenen der Gangstufen wird dabei ein separater Referenz-Schaltpunkt ermittelt. Das heißt, die Schaltpunkte werden für jede einzelne aller Gangstufen individuell ermittelt. Dadurch kann die Schaltstrategie besonders präzise angepasst werden, um einen optimalen Fahrkomfort für den Fahrer des Fahrrads bereitstellen zu können.

Weiterhin führt die Erfindung zu einem Schaltsystem eines Fahrrads, vorzugsweise eines Elektrofahrrads, umfassend eine Gangschaltung, und eine Steuereinheit. Die Steuereinheit ist dabei eingerichtet, die Gangschaltung zu betätigen und das beschriebene Verfahren durchzuführen. Vorzugsweise umfasst die Gangschaltung eine Kettenschaltung, welche eingerichtet ist, eine Fahrradkette zwischen Ritzeln unterschiedlicher Größe zu bewegen, um dadurch ein Übersetzungsverhältnis zu verändern. Alternativ oder zusätzlich bevorzugt kann die Gangschaltung eine Getriebeschaltung umfassen. Besonders bevorzugt weist die Gangschaltung eine elektronische Betätigungsvorrichtung auf, wobei insbesondere die Steuereinheit eingerichtet ist, die elektronische Betätigungsvorrichtung der Gangschaltung zu betätigen.

Ferner betrifft die Erfindung ein Fahrrad, vorzugsweise ein Elektrofahrrad, welches das beschriebene Schaltsystem umfasst.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Fahrrads, bei dem ein Verfahren zum Steuern einer Gangschaltung des Fahrrads gemäß einem ersten Ausführungsbeispiel der Erfindung durchgeführt wird,
- Figur 2: eine stark vereinfachte schematische Ansicht von Schritten des Verfahrens des ersten Ausführungsbeispiels,
- Figur 3: eine vereinfachte schematische Ansicht von Schaltvorgängen bei der Durchführung des Verfahrens des ersten Ausführungsbeispiels,
- Figur 4: eine vereinfachte schematische Ansicht von Schaltvorgängen bei der Durchführung eines Verfahrens gemäß einem zweiten Ausführungsbeispiel der Erfindung,
- Figur 5: eine stark vereinfachte schematische Ansicht von Schritten eines Verfahrens gemäß einem dritten Ausführungsbeispiel der Erfindung,
- Figur 6: eine vereinfachte schematische Ansicht von Schaltvorgängen bei der Durchführung des Verfahrens des dritten Ausführungsbeispiels, und
- Figur 7: eine vereinfachte schematische Ansicht von Schaltvorgängen bei der Durchführung eines Verfahrens gemäß einem vierten Ausführungsbeispiel der Erfindung.

### Bevorzugte Ausführungsformen der Erfindung

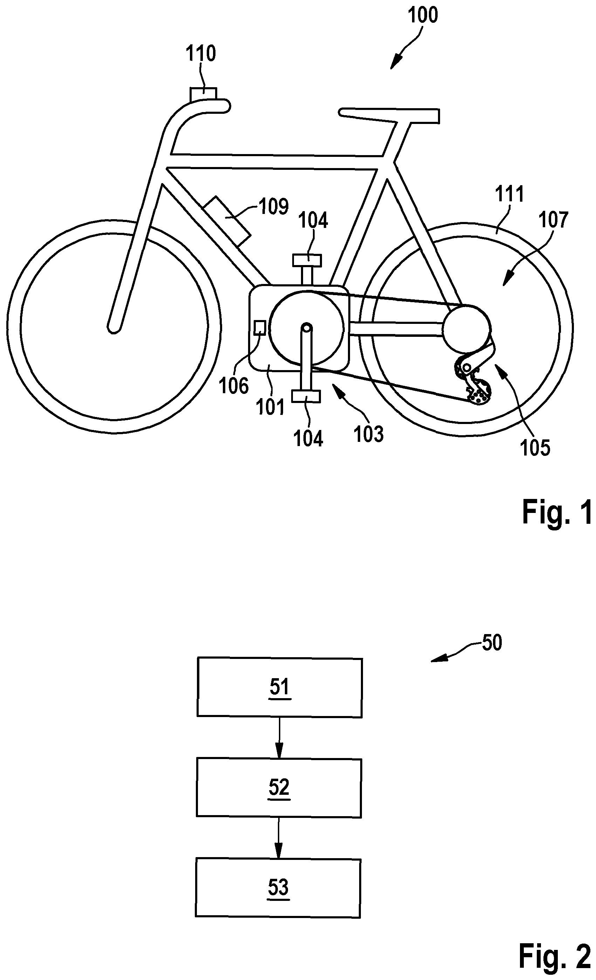

Figur 1 zeigt eine vereinfachte schematische Ansicht eines Fahrrads 100 mit einem Schaltsystem 107, welches eine Gangschaltung 105 und eine Steuereinheit 106 umfasst. Bei der Gangschaltung 105 handelt es sich um eine Kettenschaltung, welche einen Umwerfer und mehrere verschieden große Ritzel zumindest an einer Hinterradnabe des Fahrrads 100 umfasst.

Die Gangschaltung 105 weist eine elektronische Betätigungsvorrichtung auf, welche im Ansprechen auf einen Empfang elektronischer Betätigungssignale einen Gangwechsel, das heißt eine Änderung einer Übersetzung im Antriebsstrang des Fahrrads 100, bewirkt. Die elektronischen Betätigungssignale können von der Steuereinheit 106 erzeugt werden. Insbesondere kann dabei eine automatische Schaltung des Fahrrads 100 bereitgestellt werden.

Bei dem Fahrrad 100 handelt es sich um ein Elektrofahrrad, welches eine Antriebseinheit 101, insbesondere mit einem Elektromotor, umfasst. Vorzugsweise ist die Steuereinheit 106 in die Antriebseinheit 101 integriert. Die Antriebseinheit 101 kann mittels eines elektrischen Energiespeichers 109 des Fahrrads 100 mit elektrischer Energie versorgt werden. Die Antriebseinheit 101 kann dabei die mittels Muskelkraft eines Fahrers des Fahrrads 100 erzeugte Tretkraft durch ein elektromotorisch erzeugtes Motordrehmoment unterstützen.

Die Steuereinheit 6 ist dabei eingerichtet, ein Verfahren 50 zum, insbesondere automatischen, Steuern der Gangschaltung 105 des Fahrrads 100 durchzuführen. Die Verfahrensschritte des Verfahrens 50 sind stark vereinfacht schematisch in der Figur 2 dargestellt. Details der Schaltvorgänge werden später im Detail beschrieben. Zunächst erfolgt eine allgemeine stark vereinfachte Beschreibung des Verfahrens 50.

Bei dem Verfahren 50 erfolgt im Schritt 51 ein Ermitteln eines Referenz-Schaltpunkts 1 und basierend darauf ein Ermitteln eines Soll-Hochschaltpunkts 31 und eines Soll-Runterschaltpunkts 32.

Am Soll-Hochschaltpunkt 31 wird, vorzugsweise bei steigender Geschwindigkeit 22 des Fahrrads 100, in die nächstgrößere Gangstufe hochgeschalten. Am Soll-Runterschaltpunkt 32 wird, vorzugsweise bei sinkender Geschwindigkeit 22 des Fahrrads 100, in die nächstkleinere Gangstufe runtergeschalten.

Ebenfalls kann im Schritt 51 für jeden Soll-Hochschaltpunkt 31 und Soll-Runterschaltpunkt 32 eine Schalt-Geschwindigkeit 30 ermittelt werden, an der der entsprechende Schaltpunkt liegt.

Im Schritt 52 erfolgt bei dem Verfahren 50 ein Erfassen einer momentanen Geschwindigkeit 22 des Fahrrads 100. Im Schritt 53 erfolgt das Ansteuern eines Gangwechsels, wenn die erfasste momentane Geschwindigkeit 22 eine der Schalt-Geschwindigkeiten 30 erreicht.

Nachfolgend erfolgt eine detailliertere Beschreibung der Schaltpunkte. Das erste Ausführungsbeispiel des Verfahrens 50 gemäß den Figuren 1 bis 3 zeigt dabei eine besonders einfache Ausführungsvariante des Verfahrens 50. Das Verfahren 50 gemäß den zweiten bis vierten Ausführungsbeispielen zeigt weitere Abwandlungen.

Die nachfolgend beschriebenen Schaltpunkte und Gangwechsel werden beispielhaft anhand eines Gangwechsels zwischen den beiden höchsten Gangstufen, das heißt zwischen den beiden größten Übersetzungen, beschrieben. Vorzugsweise gilt das beschriebene in analoger Weise für sämtliche der weiteren Gangstufen der Gangschaltung 105.

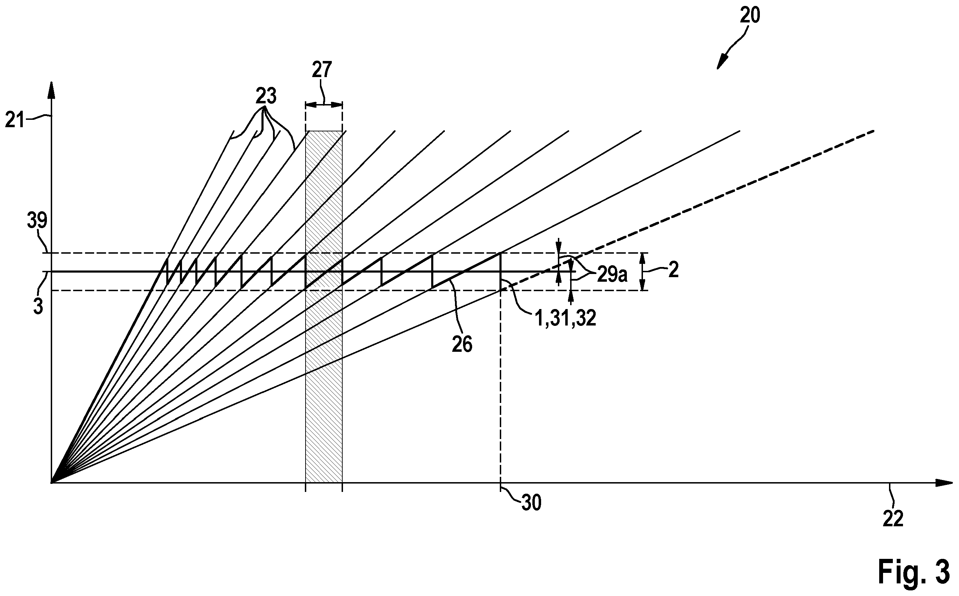

In der Figur 3 ist eine vereinfachte schematische Ansicht von Schaltvorgängen bei der Durchführung des Verfahrens 50 des ersten Ausführungsbeispiels gezeigt. Figur 3 zeigt dabei ein sogenanntes Entfaltungsdiagramm 20 des Antriebssystems des Fahrrads 100. Dargestellt ist in dem Entfaltungsdiagramm 20 ein Zusammenhang zwischen einer Trittfrequenz 21 und einer Geschwindigkeit 22 für jede der Gangstufen der Gangschaltung 105. Die Geraden 23 repräsentieren dabei die verschiedenen Gangstufen der Gangschaltung 105. Diese Geraden 23 sind dabei fest definiert durch die jeweiligen mechanischen Eigenschaften des Antriebssystems des Fahrrads 100, insbesondere eines mechanischen Übertragungswegs zwischen den Pedalen 104 und dem Hinterrad 111 des Fahrrads 100. Insbesondere sind die jeweiligen Steigungen der Geraden 23 abhängig vom jeweiligen Übersetzungsverhältnis jeder Gangstufe.

Die Geraden 23 mit geringerer Steigung, das heißt in Richtung rechts unten im Entfaltungsdiagramm 20, bilden dabei höhere Gänge ab mit größeren Übersetzungsverhältnissen.

Bei dem Verfahren 50 ist eine Referenz-Trittfrequenz 3 definiert, welche beispielsweise ein vorgegebener konstanter Wert ist. Beispielsweise kann die Referenz-Trittfrequenz 3 durch den Fahrer des Fahrrads 100 vorgegeben werden.

Beim Betrieb des Fahrrads 100 liegt insbesondere jeder Betriebspunkt des Schaltsystems 107 auf einer Betriebslinie 26, wie in Figur 3 gekennzeichnet. Die Betriebslinie 26 liegt dabei stets auf einer der Geraden 23, wobei bei einem Gangwechsel jeweils auf die benachbarte Gerade 23 mittels eines in Figur 3 vertikal dargestellten Sprungs gewechselt wird.

Im ersten Ausführungsbeispiel wird ein Referenz-Schaltpunkt 1 derart ermittelt, dass bei einem am Referenz-Schaltpunkt 1 durchgeführten Gangwechsel ein durch diesen Gangwechsel bewirkter Trittfrequenz-Sprung 2 symmetrisch zu der Referenz-Trittfrequenz 3 ist. Der Trittfrequenz-Sprung 2 entspricht dabei im Entfaltungsdiagramm 20 einem Betrag einer Trittfrequenz-Differenz, das heißt einem vertikalen Abstand, zwischen der aktuellen Geraden 23 und der benachbarten Geraden 23, in die mittels des Gangwechsels gesprungen wird.

Mit anderen Worten wird der Referenz-Schaltpunkt 1 derart ausgewählt, dass genau am Referenz-Schaltpunkt 1 ein Teil-Betrag 29a zwischen der Referenz-Trittfrequenz 3 und jeweils der Trittfrequenz 21 in der Gangstufe vor bzw. nach dem Gangwechsel gleich ist.

Im ersten Ausführungsbeispiel entspricht der so ermittelte Referenz-Schaltpunkt 1 zugleich einem Soll-Hochschaltpunkt 31 und einem Soll-Runterschaltpunkt 32, an welchem das Hochschalten bzw. Runterschalten tatsächlich initiiert wird.

Durch die entsprechend definierten Referenz-Schaltpunkte 1, und da diese im ersten Ausführungsbeispiel auch den tatsächlichen Soll-Schaltpunkten entsprechen, kann aus dem Entfaltungsdiagramm 20 mit der entsprechend festgelegten Betriebslinie 26 ein Geschwindigkeitsbereich 27 für jede Gangstufe als derjenige Bereich zwischen zwei nebeneinanderliegenden vertikalen Trittfrequenz-Sprüngen abgelesen werden, wie in der Figur 3 beispielhaft für den achten Gang gekennzeichnet.

Ferner wird bei dem Verfahren 50 für jeden Soll-Schaltpunkt 31, 32 eine SchaltGeschwindigkeit 30 ermittelt und beispielsweise gespeichert. Beim Betrieb des Verfahrens 50 erfolgt das Ansteuern der Gangwechsel dabei, vorzugsweise ausschließlich, in Abhängigkeit der Geschwindigkeit. Das heißt, wenn die momentane Geschwindigkeit des Fahrrads 100 steigt und die SchaltGeschwindigkeit 30 für eine der Gangstufen erreicht, wird ein Gangwechsel in die nächsthöhere Gangstufe angesteuert. Analog wird, wenn die momentane Geschwindigkeit des Fahrrads 100 sinkt und die Schalt-Geschwindigkeit 30 für eine der Gangstufen erreicht, ein Gangwechsel in die nächstkleinere Gangstufe angesteuert.

Bevorzugt kann die Bestimmung sämtlicher Schaltpunkte 1, 31, 32 dabei einmalig, beispielsweise vor Inbetriebnahme des Fahrrads 100, mittels der Steuereinheit 106 durchgeführt werden. Vorzugsweise können für sämtliche Schaltpunkte 1, 31, 32 die jeweiligen Schalt-Geschwindigkeiten 30 gespeichert werden.

Besonders vorteilhaft ist es dabei, wenn während des Betriebs des Fahrrads 100 sämtliche Gangwechsel, insbesondere ausschließlich, basierend auf der momentanen Gangstufe und den Schalt-Geschwindigkeiten 30 angesteuert werden. Damit kann eine besonders einfache und in jeder Fahrsituation zuverlässig genaue Wahl der Gangstufen ermöglicht werden, um einen effizienten und komfortablen Betrieb des Fahrrads 100 zu ermöglichen.

In einer alternativen Ausführung kann die Ansteuerung der Gangwechsel basierend auf einer ermittelten Schalt-Trittfrequenz 39 am Soll-Schaltpunkt 31, 32 und eine Erfassung der momentanen Trittfrequenz des Fahrrads 100 erfolgen.

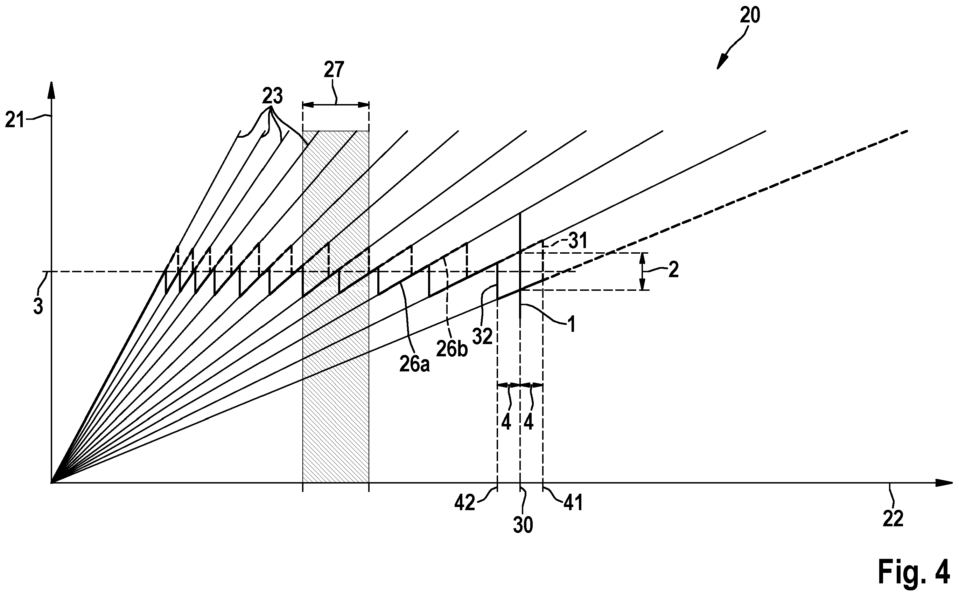

Figur 4 zeigt eine vereinfachte schematische Ansicht von Schaltvorgängen bei der Durchführung eines Verfahrens 50 gemäß einem zweiten Ausführungsbeispiel der Erfindung. Das zweite Ausführungsbeispiel entspricht im Wesentlichen dem ersten Ausführungsbeispiel der Figuren 1 bis 3, mit dem Unterschied, dass zusätzlich eine Schalthysterese 4 vorgesehen ist, um die tatsächlichen Soll-Schaltpunkte 31, 32 zu bestimmen.

Im Detail ist im zweiten Ausführungsbeispiel der Figur 4 für jeden Referenz-Schaltpunkt 1 jeweils ein separater Soll-Hochschaltpunkt 31 und ein separater Soll-Runterschaltpunkt 32 definiert. Der Soll-Hochschaltpunkt 31 ist dabei dadurch definiert, dass der Referenz-Schaltpunkt 1 um die Schalthysterese 4 hin zu größeren Geschwindigkeiten 22 verschoben wird. Der Soll-Runterschaltpunkt 32 ist dadurch definiert, dass der Referenz-Schaltpunkt 1 um die Schalthysterese

4 hin zu größeren Geschwindigkeiten 22 verschoben wird. Somit erfolgt das Hochschalten bei steigender Geschwindigkeit 22 erst später bei größeren Geschwindigkeiten 22, und das Runterschalten bei sinkender Geschwindigkeit 22 analog erst später bei kleineren Geschwindigkeiten jeweils im Vergleich zum Referenz-Schaltpunkt 1. Somit ergibt sich auch für den Soll-Hochschaltpunkt 31 eine Hochschalt-Geschwindigkeit 41, welche unterschiedlich von einer Runterschalt-Geschwindigkeit 42 des Soll-Runterschaltpunkts 32 ist.

Dadurch wird beispielsweise bei häufigeren Geschwindigkeitswechseln nahe am Referenz-Schaltpunkt 1 bewirkt, dass deutlich seltener einen Gangwechsel initiiert wird. Insbesondere kann somit ein häufiges unerwünschtes Hin- und Herschalten vermieden werden.

Die Schalthysterese 4 ist dabei im zweiten Ausführungsbeispiel als eine vordefinierte konstante prozentuale Abweichung bezüglich des Referenz-Schaltpunkts 1 definiert. Im Detail entspricht die Schalthysterese 4 dabei 5 % des Geschwindigkeitswerts des Referenz-Schaltpunkts 1.

Wie in der Figur 4 zu erkennen, wird durch die Schalthysterese 4 ein breiterer Geschwindigkeitsbereich 27 für die einzelnen Gangstufen bewirkt, wobei sich diese Geschwindigkeitsbereiche 27 aufgrund der Schalthysterese 4 teilweise überschneiden (nicht dargestellt).

Im in der Figur 4 gezeigten Ausführungsbeispiel ist die Schalthysterese 4 jeweils symmetrisch bezüglich des Referenz-Schaltpunkts 1 ausgebildet. In einer alternativen Ausführungsform kann auch eine asymmetrische Schalthysterese 4 vorgesehen sein. Das heißt, pro Referenz-Schaltpunkt 1 wird für die Ermittlung des entsprechenden Soll-Hochschaltpunkts 31 eine andere Schalthysterese 4 verwendet als für die Ermittlung des entsprechenden Soll-Runterschaltpunkts 32.

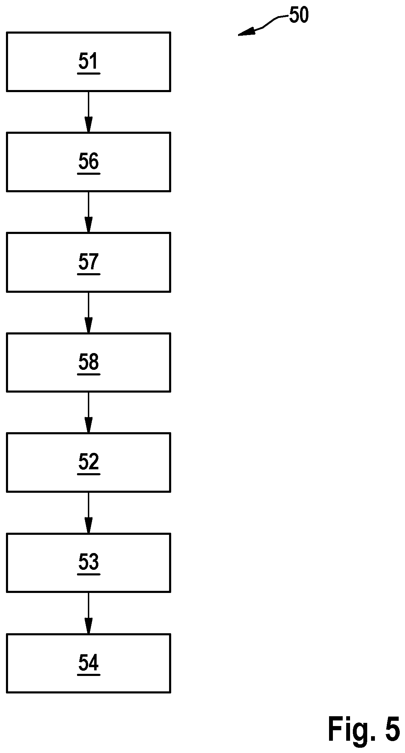

Figur 5 zeigt eine stark vereinfachte schematische Ansicht von Schritten eines Verfahrens 50 gemäß einem dritten Ausführungsbeispiel der Erfindung. Das dritte Ausführungsbeispiel entspricht im Wesentlichen dem zweiten Ausführungsbeispiel der Figur 4, mit dem Unterschied, dass die Schalthysterese 4 adaptiv an den aktuellen Fahrbetrieb des Fahrrads 100 anpassbar ausgebildet ist.

Hierfür umfasst das Verfahren 50 nach dem Schritt 51 des Ermittelns des Referenz-Schaltpunkts 1 und vor dem Schritt 52 die zusätzlichen Schritte 56 bis 58. Im Schritt 56 erfolgt ein Ermitteln der momentanen Fahrsituation des Fahrrads 100. Vorzugsweise wird hierbei mit einer Sensorik 110 des Fahrrads 100 die momentane Fahrsituation erfasst und erkannt. Basierend auf der so ermittelten Fahrsituation wird anschließend im Schritt 57 die aktuelle Schalthysterese 4 adaptiv angepasst. Im Schritt 58 erfolgt basierend auf der angepassten Schalthysterese 4 das Ermitteln der Soll-Hochschaltpunkts 31 und der Soll-Runterschaltpunkte 32.

Das adaptive Anpassen der Schalthysterese 4 kann dabei anhand verschiedenster charakteristischer Fahrsituation erfolgen. Vorzugsweise kann dabei allgemein basierend auf der erkannten Fahrsituation ermittelt werden, ob entweder eine optimale Einregelung auf die Referenz-Trittfrequenz 3, oder alternativ eine Minimierung der Anzahl an Schaltwechseln priorisiert werden soll. Für den ersten Fall, nämlich einer bevorzugten Minimierung einer Abweichung einer Ist-Trittfrequenz von der Referenz-Trittfrequenz 3, wird insbesondere eine niedrige Schalthysterese 4, von beispielsweise maximal 10 % eingestellt. Dies entspricht beispielsweise dem Entfaltungsdiagramm 20 der Figur 4. Für den zweiten Fall, nämlich einer bevorzugten Minimierung der Anzahl an Gangwechsel, wird insbesondere eine hohe Schalthysterese 4, von beispielsweise mehr als 10 % eingestellt.

Bei dem Verfahren 20 können vordefinierte Fahrsituation erkannt werden und im Ansprechen darauf vordefinierte Schalthysteresen 4 eingestellt werden. Beispielsweise kann mit dem Verfahren 50 gemäß Figur 5, wie bereits erwähnt, dass Entfaltungsdiagramm 20 der Figur 4 erhalten werden durch die adaptive Anpassung der Schalthysterese 4, wenn eine Konstantfahrt als momentane Fahrsituation ermittelt wird. Die Konstantfahrt kann beispielsweise bei Erkennung einer im Wesentlichen konstant bleibenden Geschwindigkeit 22 erkannt werden. Dabei wird die Schalthysterese 4 auf den vergleichsweise niedrigen Wert von 5 % reduziert, um ein präzises Einregeln auf die Referenz-Trittfrequenz 3 ermöglichen zu können.

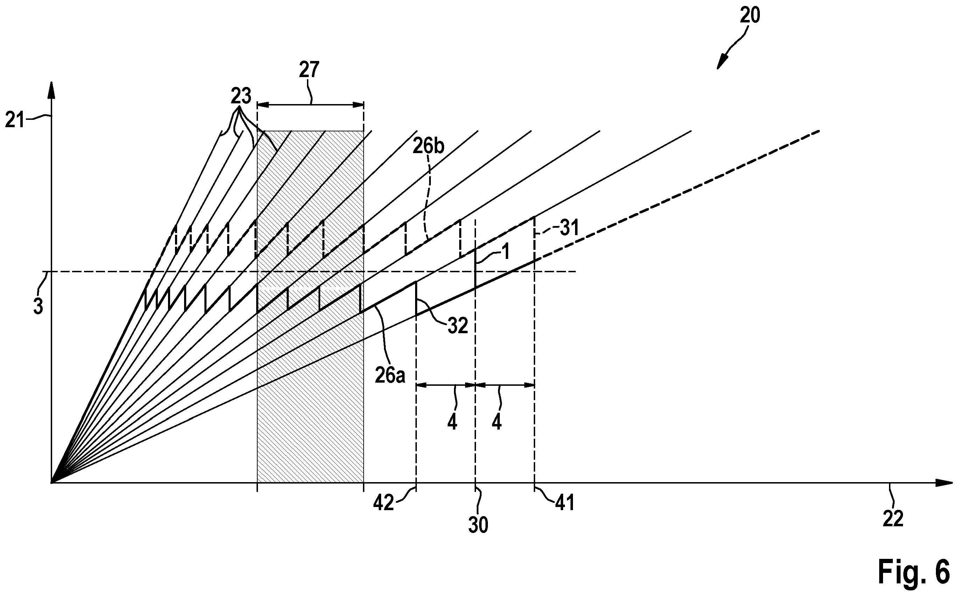

Zudem kann bei dem Verfahren 50 der Figur 5 ein Ermitteln einer Tretunterbrechung als momentane Fahrsituation und/oder ein Ermitteln einer Bergfahrt als momentane Fahrsituation erfolgen und im Ansprechen darauf eine Erhöhung der Schalthysterese 4 auf beispielsweise mindestens 15 % vorgenommen werden. Ein entsprechendes Entfaltungsdiagramm 20 ist in der Figur 6 dargestellt. Wie in der Figur 6 zu erkennen resultiert daraus ein noch deutlich breiterer Geschwindigkeitsbereich 27 für einen einzelnen Gang, und somit beispielsweise auch eine deutlich größere Überschneidung der einzelnen Gänge. Dadurch kann eine gesamte Anzahl der Schaltwechsel bei der Fahrt des Fahrrads 100 verringert werden, was sich in diesen Fahrsituationen vorteilhaft auf den Fahrkomfort für den Fahrer auswirkt.

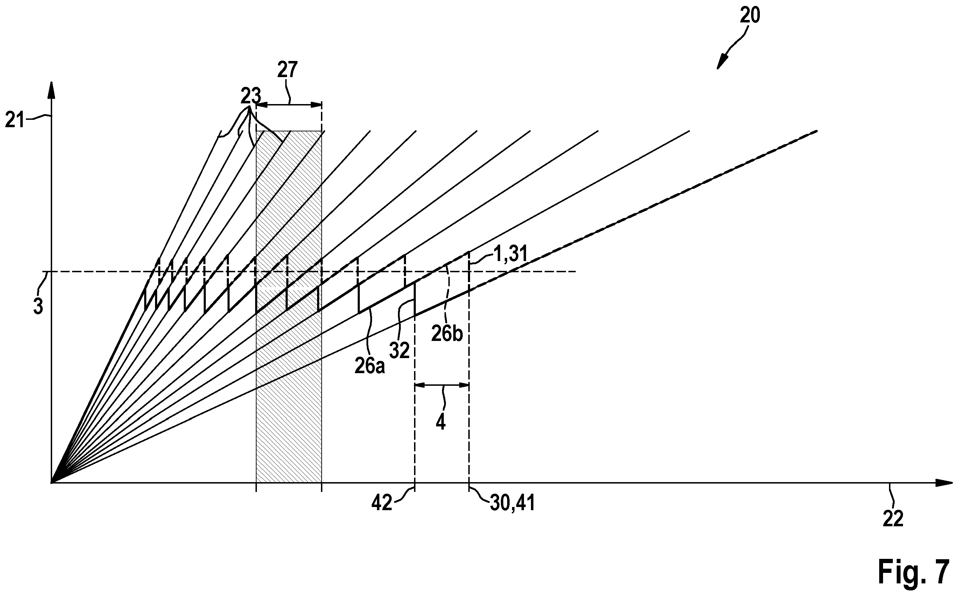

Figur 7 zeigt eine vereinfachte schematische Ansicht von Schaltvorgängen bei der Durchführung eines Verfahrens 50 gemäß einem vierten Ausführungsbeispiel der Erfindung. Das vierte Ausführungsbeispiel entspricht im Wesentlichen dem dritten Ausführungsbeispiel der Figuren 5 und 6, und kann insbesondere als eine Weiterbildung des Verfahrens 50 des dritten Ausführungsbeispiels um eine weitere zusätzliche Fahrsituation angesehen werden. Im vierten Ausführungsbeispiel der Figur 7 erfolgt eine asymmetrische Anpassung der Schalthysterese 4 im Ansprechen auf eine Erkennung einer Beschleunigungsfahrt als momentane Fahrsituation des Fahrrads 100.

In diesem Fall wird die Schalthysterese 4 für den Soll-Hochschaltpunkt 31 auf den Wert Null gesetzt, sodass der Soll-Hochschaltpunkt 31 dem Referenz-Schaltpunkt 1 entspricht.

Gleichzeitig wird die Schalthysterese 4 für den Soll-Runterschaltpunkt 32 beibehalten, oder alternativ erhöht, beispielsweise auf 15 %. Dadurch kann bei der Beschleunigung des Fahrrads 100 über mehrere Gänge hinweg stets eine optimale Trittfrequenz, insbesondere nahe an der Referenz-Trittfrequenz 3, eingeregelt werden, indem stets nahe an dieser geschalten wird. Somit kann auch in dieser Fahrsituation ein optimierter Fahrkomfort für den Fahrer des Fahrrads 100 bereitgestellt werden.

Es sei angemerkt, dass die beschriebenen Ausführungsbeispiele beliebig miteinander kombiniert werden können. Beispielsweise kann jedes der beschriebenen Ausführungsbeispiele für bestimmte zeitliche Bereiche und/oder bestimmte Betriebsmodi von einem Fahrbetrieb des Fahrrads 100 vorgesehen sein.

## Patentansprüche

1. Verfahren zum Steuern einer Gangschaltung (105) eines Fahrrads (100), umfassend die Schritte:
- Ermitteln eines Referenz-Schaltpunkts (1),
- Ermitteln einer momentanen Fahrsituation des Fahrrads (100),
- Bestimmen einer Schalthysterese (4) basierend auf der ermittelten momentanen Fahrsituation, und
- Ermitteln eines Soll-Schaltpunkts (31, 32) durch Anpassen des Referenz-Schaltpunkts (1) mittels der bestimmten Schalthysterese (4), wobei die Schalthysterese (4) ein bestimmter Änderungsbetrag ist, um den der Referenz-Schaltpunkt (1) hin zu dem Soll-Schaltpunkt (31, 32) verschoben wird.

2. Verfahren nach Anspruch 1, wobei der Referenz-Schaltpunkt (1) derart ermittelt wird, dass bei einem Gangwechsel am Referenz-Schaltpunkt (1) ein durch den Gangwechsel bewirkter Trittfrequenz-Sprung (2) symmetrisch zu einer Referenz-Trittfrequenz (3) ist.

3. Verfahren nach Anspruch 2,
- wobei in einer ersten Fahrsituation ein Reduzieren der Schalthysterese (4) erfolgt, zum Reduzieren einer Abweichung einer Ist-Trittfrequenz von der Referenz-Trittfrequenz (3), und/oder
- wobei in einer zweiten Fahrsituation ein Erhöhen der Schalthysterese (4) erfolgt, zum Reduzieren einer Anzahl an Gangwechseln.

4. Verfahren nach einem der vorhergehenden Ansprüche, wobei pro Referenz-Schaltpunkt (1) jeweils ein Soll-Hochschaltpunkt (31) und ein Soll-Runterschaltpunkt (32) durch Anpassen des Referenz-Schaltpunkts (1) mittels der Schalthysterese (4) ermittelt wird.

5. Verfahren nach Anspruch 4, wobei der Soll-Runterschaltpunkt (32) bei kleineren Geschwindigkeiten (22) im Vergleich zum Referenz-Schaltpunkt (1) liegt, und/oder wobei der Soll-Hochschaltpunkt (31) bei größeren Geschwindigkeiten (22) im Vergleich zum Referenz-Schaltpunkt (1) liegt.

6. Verfahren nach Anspruch 4 oder 5, wobei die Schalthysterese (4) pro Referenz-Schaltpunkt (1) zum jeweiligen Soll-Runterschaltpunkt (32) und Soll-Hochschaltpunkt (31) gleich oder unterschiedlich bestimmt wird.

7. Verfahren nach einem der vorhergehenden Ansprüche, umfassend die Schritte:
- Ermitteln einer Konstantfahrt als momentane Fahrsituation, und
- Verringern der Schalthysterese (4) im Ansprechen auf das Ermitteln der Konstantfahrt.

8. Verfahren nach einem der vorhergehenden Ansprüche, umfassend die Schritte:
- Ermitteln einer Tretunterbrechung als momentane Fahrsituation, und
- Erhöhen der Schalthysterese (4) im Ansprechen auf das Ermitteln der Tretunterbrechung.

9. Verfahren nach einem der vorhergehenden Ansprüche, umfassend die Schritte:
- Ermitteln einer Bergfahrt als momentane Fahrsituation, und
- Erhöhen der Schalthysterese (4) im Ansprechen auf das Ermitteln der Bergfahrt.

10. Verfahren nach einem der Ansprüche 4 bis 9, umfassend die Schritte:
- Ermitteln einer Beschleunigungsfahrt als momentane Fahrsituation, und
- Verringern der Schalthysterese (4) für den Soll-Hochschaltpunkt (31), insbesondere auf den Wert Null.

11. Verfahren nach einem der vorhergehenden Ansprüche, wobei das Ermitteln der momentanen Fahrsituation des Fahrrads (100) mittels Sensordaten einer Sensorik (110) des Fahrrads (100) erfolgt, insbesondere welche eine oder mehrere der folgenden Sensordaten umfassen: Neigung, Beschleunigung, Geschwindigkeit, Tretmoment, Trittfrequenz.

12. Verfahren nach einem der vorhergehenden Ansprüche, umfassend die Schritte:
- Ermitteln einer Schalt-Geschwindigkeit (30) am Soll-Schaltpunkt (31, 32) basierend auf einem Übersetzungsverhältnis des Fahrrads (100),
- Erfassen einer Geschwindigkeit (22), und
- Ansteuern eines Gangwechsels, wenn die erfasste Geschwindigkeit (22) die Schalt-Geschwindigkeit (30) erreicht.

13. Verfahren nach einem der vorhergehenden Ansprüche, wobei die Gangschaltung (105) des Fahrrads (100) mehrere Gangstufen aufweist, und wobei für jeden Gangwechsel zwischen sämtlichen Gangstufen ein separater Soll-Schaltpunkt (31, 32) ermittelt wird.

14. Schaltsystem eines Fahrrads (100), umfassend eine Gangschaltung (105), und eine Steuereinheit (106), welche eingerichtet ist, die Gangschaltung (105) zu betätigen, wobei die Steuereinheit (106) eingerichtet ist, das Verfahren (50) nach einem der vorhergehenden Ansprüche durchzuführen.

15. Fahrrad, insbesondere Elektrofahrrad, umfassend ein Schaltsystem (107) nach Anspruch 14.

## Claims

1. Method for controlling a gear shifter (105) of a bicycle (100), comprising the following steps:
- determining a reference shifting point (1),
- determining an instantaneous riding situation of the bicycle (100),
- defining a shifting hysteresis (4) based on the instantaneous driving situation determined, and
- determining a setpoint shifting point (31, 32) by adjusting the reference shifting point (1) by means of the defined shifting hysteresis (4), wherein the shifting hysteresis (4) is a defined amount of change, by which the reference shifting point (1) is moved towards the setpoint shifting point (31, 32).

2. Method according to Claim 1, wherein the reference shifting point (1) is determined such that, in the case of a gear change at the reference shifting point (1), a pedalling frequency jump (2) effected by the gear change is symmetrical to a reference pedalling frequency (3).

3. Method according to Claim 2,
- wherein, in a first riding situation, a reduction of the shifting hysteresis (4) is carried out, in order to reduce a deviation of an actual pedalling frequency from the reference pedalling frequency (3), and/or
- wherein, in a second riding situation, the shifting hysteresis (4) is increased in order to reduce a number of gear changes.

4. Method according to any one of the preceding claims, wherein, for each reference shifting point (1), a setpoint upshifting point (31) and a setpoint downshifting point (32) are determined by adjusting the reference shifting point (1) by means of the shifting hysteresis (4).

5. Method according to Claim 4, wherein the setpoint downshifting point (32) lies at lower speeds (22) compared to the reference shifting point (1), and/or wherein the setpoint upshifting point (31) lies at higher speeds (22) compared to the reference shifting point (1).

6. Method according to Claim 4 or 5, wherein the shifting hysteresis (4) per reference switching point (1) is determined equally or differently with respect to the respective setpoint downshifting point (32) and setpoint upshifting point (31).

7. Method according to any one of the preceding claims, comprising the following steps:
- determining constant riding as a current riding situation, and
- reducing the shifting hysteresis (4) in response to determining the constant riding.

8. Method according to any one of the preceding claims, comprising the following steps:
- determining a pedal interruption as a current riding situation, and
- increasing the shifting hysteresis (4) in response to determining the pedal interruption.

9. Method according to any one of the preceding claims, comprising the following steps:
- determining an ascent as an instantaneous riding situation, and
- increasing the shifting hysteresis (4) in response to determining the ascent.

10. Method according to any one of Claims 4 to 9, comprising the following steps:
- determining an acceleration as an instantaneous riding situation, and
- decreasing the shifting hysteresis (4) for the setpoint upshifting point (31), in particular to the value zero.

11. Method according to any one of the preceding claims, wherein determining the current riding situation of the bicycle (100) takes place by means of sensor data of a sensor system (110) of the bicycle (100), which comprise, in particular, one or more of the following sensor data: slope, acceleration, speed, pedalling torque, pedalling frequency.

12. Method according to any one of the preceding claims, comprising the following steps:
- determine a shifting speed (30) at the setpoint shifting point (31, 32) based on a gear ratio of the bicycle (100),
- detecting a speed (22), and
- actuating a gear change when the detected speed (22) reaches the shifting speed (30).

13. Method according to any one of the preceding claims, wherein the gear shifter (105) of the bicycle (100) comprises a plurality of gear stages, and wherein a separate target shifting point (31, 32) is determined for each gear change between all gear stages.

14. Shifting system of a bicycle (100), comprising a gear shifter (105), and a control unit (106) which is configured to operate the gear shifter (105), wherein the control unit (106) is configured to carry out the method (50) according to any one of the preceding claims.

15. Bicycle, in particular electric bicycle, comprising a shifting system (107) according to Claim 14.

## Revendications

1. Procédé de commande d'un dérailleur (105) d'une bicyclette (100), comprenant les étapes suivantes :
- identification d'un point de changement de rapport de référence (1),
- identification d'une situation de déplacement momentanée de la bicyclette (100),
- détermination d'une hystérésis (4) de changement de rapport sur la base de la situation de déplacement momentanée identifiée, et
- identification d'un point de changement de rapport de consigne (31, 32) en adaptant le point de changement de rapport de référence (1) au moyen de l'hystérésis (4) de changement de rapport déterminée, l'hystérésis (4) de changement de rapport étant une valeur de modification déterminée par laquelle le point de changement de rapport de référence (1) est déplacé vers le point de changement de rapport de consigne (31, 32).

2. Procédé selon la revendication 1, le point de changement de rapport de référence (1) étant identifié de telle sorte que, lors d'un changement de rapport au point de changement de rapport de référence (1), un saut de cadence (2) provoqué par le changement de rapport soit symétrique par rapport à une cadence de référence (3).

3. Procédé selon la revendication 2,
- dans une première situation de déplacement, une réduction de l'hystérésis (4) de changement de rapport est effectuée afin de réduire un écart entre une cadence réelle et la cadence de référence (3), et/ou
- dans une deuxième situation de déplacement, une augmentation de l'hystérésis (4) de changement de rapport est effectuée afin de réduire un nombre de changements de rapport.

4. Procédé selon l'une des revendications précédentes, un point de changement vers le rapport supérieur de consigne (31) et un point de changement vers le rapport inférieur de consigne (32) étant respectivement identifiés pour chaque point de changement de rapport de référence (1) en adaptant le point de changement de rapport de référence (1) au moyen de l'hystérésis (4) de changement de rapport.

5. Procédé selon la revendication 4, le point de changement vers le rapport inférieur de consigne (32) se situant à des vitesses plus faibles (22) en comparaison du point de changement de rapport de référence (1), et/ou le point de changement vers le rapport supérieur de consigne (31) se situant à des vitesses plus élevées (22) en comparaison du point de changement de rapport de référence (1).

6. Procédé selon la revendication 4 ou 5, l'hystérésis (4) de changement de rapport par point de changement de rapport de référence (1) étant déterminée égale ou différente pour le point de point de changement vers le rapport inférieur de consigne (32) et le point de changement vers le rapport supérieur de consigne (31) respectifs.

7. Procédé selon l'une des revendications précédentes, comprenant les étapes suivantes :
- identification d'un déplacement constant en tant que situation de déplacement actuelle, et
- diminution de l'hystérésis (4) de changement de rapport en réponse à l'identification du déplacement constant.

8. Procédé selon l'une des revendications précédentes, comprenant les étapes suivantes :
- identification d'une interruption de pédalage en tant que situation de déplacement momentanée, et
- augmentation de l'hystérésis (4) de changement de rapport en réponse à l'identification de l'interruption de pédalage.

9. Procédé selon l'une des revendications précédentes, comprenant les étapes suivantes :
- identification d'un déplacement en montagne en tant que situation de déplacement momentanée, et
- augmentation de l'hystérésis (4) de changement de rapport en réponse à l'identification du déplacement en montagne.

10. Procédé selon l'une des revendications 4 à 9, comprenant les étapes suivantes :
- identification d'un déplacement en accélération en tant que situation de déplacement momentanée, et
- diminution de l'hystérésis (4) de changement de rapport pour le point de changement vers le rapport supérieur de consigne (31), en particulier à la valeur zéro.

11. Procédé selon l'une des revendications précédentes, l'identification de la situation de déplacement momentanée de la bicyclette (100) étant effectuée au moyen de données de capteur d'un système de détection (110) de la bicyclette (100), en particulier qui comprennent une ou plusieurs des données de capteur suivantes : inclinaison, accélération, vitesse, couple de pédalage, cadence.

12. Procédé selon l'une des revendications précédentes, comprenant les étapes suivantes :
- identification d'une vitesse de changement de rapport (30) au point de changement vers le rapport de consigne (31, 32) sur la base d'un rapport de démultiplication de la bicyclette (100),
- détection d'une vitesse (22), et
- commande d'un changement de rapport lorsque la vitesse détectée (22) atteint la vitesse de changement de rapport (30).

13. Procédé selon l'une des revendications précédentes, le dérailleur (105) de la bicyclette (100) possédant plusieurs rapports et un point de changement de rapport de consigne (31, 32) distinct étant identifié pour chaque changement de rapport entre tous les rapports.

14. Système de changement de rapport d'une bicyclette (100), comprenant un dérailleur (105) et une unité de commande (106), laquelle est conçue pour actionner le dérailleur (105), l'unité de commande (106) étant conçue pour mettre en œuvre le procédé (50) selon l'une des revendications précédentes.

15. Bicyclette, en particulier bicyclette électrique, comprenant un système de changement de rapport (107) selon la revendication 14.
